# EUROPEAN PATENT APPLICATION

(11) **EP 4 280 778 A2**
(43) Date of publication of application: **22.11.2023**
(21) Application number: 23200989.4
(22) Date of filing: 09.08.2017
(51) Int. Cl.: H04W 72/12

(54) **METHOD AND DEVICE FOR INDICATING TRANSMISSION INTERVAL**

(30) Priority: 12.08.2016 CN 201610665902
(62) Divisional of application: 17838737.9
(71) Applicant: ZTE Corporation, Shenzhen, Guangdong 518057 (CN)
(72) Inventor: GOU, Wei, Guangdong, 518057 (CN); BI, Feng, Guangdong, 518057 (CN); HAO, Peng, Guangdong, 518057 (CN)
(74) Representative: Aipex B.V.

(57) **Abstract**

Provided is a method and device for indicating a transmission interval, including that: a base station configures or agrees with a UE on interval information for sending uplink grant information, where the uplink grant information is used for performing uplink data retransmission; and the uplink grant information is sent at a position indicated by the interval information to schedule the UE to retransmit uplink data. The interval information is determined in one of the following manners: a first interval indicates an interval between a position of the uplink grant information used for performing the uplink data retransmission and a position of last data transmission of the UE; and a second interval indicates an interval between a position of the uplink grant information used for performing the uplink data retransmission and a position of uplink grant information corresponding to last transmission of the uplink data.

## Description

### TECHNICAL FIELD

The present application relates to, but is not limited to, the field of communications and, in particular, relates to a method and device for indicating a transmission interval.

### BACKGROUND

A new generation mobile communication system, new radio (NR), is being researched and standardized, which is also one of the current key jobs of the 3rd generation partnership project (3GPP).

Three typical service types will exist in the NR system in the future, including: enhanced mobile broadband (eMBB), ultra-reliable and low latency communications (URLLC) and massive machine type communications (mMTC).These services have different requirements for latency, coverage and reliability. For example, for eMBB, the emphasis is on high peak transmission rates, the requirement on latency is not high (that is, no demand for low latency), and the requirement on reliability is medium For URLLC, the emphasis is on low latency and high-reliability transmission. URLLC is very strict for latency. For mMTC, the emphasis is on a large number of terminals, large connection density and larger transmission coverage, and almost no requirement for delay exists.

According to the requirements of these services, the eMBB service is suitable for being transmitted with a large bandwidth, and the transmission scheduling unit has a large duration, to ensure characteristics of a large number of transmission of the service. For the URLLC service, the amount of data is small, but the transmission time is relatively difficult to predict. The URLLC service is a temporary service, and needs to be transmitted reliably in a short time once the service occurs. This service is suitable for being transmitted by using shorter transmission units. For the mMTC service, the amount of data is small, the number of terminals is numerous, and no requirement exists for transmission latency. It is generally considered that a large transmission latency is used, and transmission within great coverage is required.

In the NR system, system networking is to be implemented with a carrier frequency higher than a carrier frequency used in 2G, 3G, and 4G systems. Currently, frequency bands widely recognized by the industry and international organizations are mainly 3 GHz to 6 GHz and 6 GHz to 100 GHz. These frequency bands basically belong to the centimeter wave band and the millimeter wave band. Studies show that the phase noise of a radio frequency (RF) device is quite high at a frequency between 6 GHz and 100 GHz, especially at a higher frequency. Such phase noise may be resisted with an increase in the subcarrier width of the orthogonal frequency division multiple access system. The high frequency is significantly different from the lower frequency bands in propagation characteristic. Since the propagation loss in the high frequency band is significantly larger than the propagation loss in the low frequency band, the coverage area of the high frequency band is generally much smaller than the coverage area of the low frequency band. A smaller coverage area generally goes with a smaller delay spread of the channel, and the corresponding coherence bandwidth is larger than the coherent bandwidth in the low frequency band range of 300 M to 3000 M. The increased subcarrier width with respect to the subcarrier width in the Long Term Evolution (LTE) system may still satisfy the design requirement on the subcarrier spacing within the coherent bandwidth. Therefore, the subcarrier spacing (equivalent to the subcarrier width) needs to be adjusted according to the carrier frequency, and the adjustment is feasible and reasonable.

The NR system covers the carrier frequency from 6 G up to 100 G. Basic frame structure parameters such as different subcarrier spacing values need to be used to adapt to the carrier frequency, that is, the frame structure design parameters at each carrier frequency are different. For example, the closer the frequency is to the core frequency of LTE, the closer the typical frame structure parameters such as subcarrier spacing are to the parameters of LTE. The higher the frequency is, the larger the subcarrier spacing is. The subcarrier spacing currently under study may be selected to be 15 kHz, 30 kHz, 60 kHz, 75 kHz, 120 kHz up to 240 kHz, or less than 15 kHz.

The frame structure parameters may be different at different frequencies in different systems. Moreover, even in NR systems at the same frequency, the subcarrier spacing parameters may also be different for different types of services. For example, the URLLC service, which emphasizes low latency, has shorter symbols and larger subcarrier spacing than eMBB. In contrast, the mMTC service, which has a service demand biased towards massive access and deep coverage, may have much smaller subcarrier spacing and much longer symbol than the eMBB service. Multiple types of services are multiplexed on the same carrier, making the frame structure parameters in a system more complicated.

### SUMMARY

The following is a summary of the subject matter described herein in detail. This summary is not intended to limit the scope of the claims.

Different subcarrier spacings are used by different services having different service characteristics. The embodiments of the present disclosure provide a method and device for indicating a transmission interval, which can implement a mixed transmission of low-latency services and non-low-latency services in one carrier, and ensure the timeliness of uplink retransmission of low-latency services.

A method for indicating a transmission interval provided by an embodiment of the present disclosure includes:
configuring, by a base station, interval information for sending uplink grant information, or agreeing the interval information by the base station and a user equipment, UE, where the uplink grant information is used for performing uplink data retransmission; and sending, by the base station, the uplink grant information at a position indicated by the interval information to schedule the UE to retransmit uplink data.

The interval information is determined in one of the following manners:
indicating, by a first interval, an interval between a position of the uplink grant information used for performing the uplink data retransmission and a position of last data transmission of the UE; and
indicating, by a second interval, an interval between a position of the uplink grant information used for performing the uplink data retransmission and a position of uplink grant information corresponding to last uplink data transmission.

A method for indicating a transmission interval provided by another embodiment of the present disclosure includes:
configuring, by a base station, interval information for sending acknowledgement (ACK)/negative acknowledgement(NACK) information corresponding to downlink data transmission, or agreeing the interval information by the base station and a UE, where the ACK/NACK information is used for determining whether downlink data is correctly received by the UE; and sending the ACK/NACK information at a position indicated by the interval information to determine whether the downlink data is correctly received by the UE.

The interval information is determined in one of the following manners:
indicating, by a third interval, an interval between a position of the ACK/NACK information corresponding to the downlink data transmission and an end position of the downlink data transmission; and
indicating, by a fourth interval, an interval between a position of the ACK/NACK information corresponding to the downlink data transmission and a position of the downlink data transmission.

A method for indicating a transmission interval provided by another embodiment of the present disclosure includes:
configuring, by a base station, interval information for sending downlink data retransmission, or agreeing the interval information by the base station and a user equipment, UE, where the downlink data retransmission is used for retransmitting downlink data when acknowledge information corresponds to the downlink data is NACK; and sending, by the base station, the downlink data retransmission at a position indicated by the interval information so that the UE re-receives the downlink data.

The interval information is determined in one of the following manners:
indicating, by a fifth interval, an interval between a position where downlink data retransmission is sent and a position of the ACK/NACK information corresponding to the downlink data; and
indicating, by a sixth interval, an interval between a position where the downlink data retransmission is sent and a position of last downlink data transmission.

A method for indicating a transmission interval provided by another embodiment of the present disclosure includes:
configuring, by a base station, interval information between sending uplink grant information and sending its corresponding uplink data, or agreeing the interval information by the base station and a user equipment, UE; and sending, the uplink data at a position indicated by the interval information so that the base station receives the uplink data.

The interval information is determined in one of the following manners:
indicating, by a seventh interval, an interval between a position where the uplink data is sent and a position of the corresponding uplink grant information.

A device for indicating a transmission interval provided by an embodiment of the present disclosure includes:
an interval information determining unit configured to configure or agree with a UE on interval information for sending uplink grant information, where the uplink grant information is used for performing uplink data retransmission; and
a sending unit configured to send the uplink grant information at a position indicated by the interval information to schedule the UE to retransmit uplink data.

The interval information is determined in one of the following manners:
indicating, by a first interval, an interval between a position of the uplink grant information used for performing the uplink data retransmission and a position of last data transmission of the UE; and
indicating, by a second interval, an interval between a position of the uplink grant information used for performing the uplink data retransmission and a position of uplink grant information corresponding to last uplink data transmission.

A device for indicating a transmission interval provided by an embodiment of the present disclosure includes:
an interval information determining unit configured to configure or agree with a UE on interval information for sending ACK/NACK information corresponding to downlink data transmission, where the ACK/NACK information is used for determining whether downlink data is correctly received by the UE; and
a sending unit configured to send the ACK/NACK information at a position indicated by the interval information to determine whether the downlink data is correctly received by the UE. The interval information is determined in one of the following manners:
indicating, by a third interval, an interval between a position of the ACK/NACK information corresponding to the downlink data transmission and an end position of the downlink data transmission; and
indicating, by a fourth interval, an interval between a position of the ACK/NACK information corresponding to the downlink data transmission and a position of the downlink data transmission.

A device for indicating a transmission interval provided by another embodiment of the present disclosure includes:
an interval information determining unit configured to configure or agree with a UE on interval information for sending downlink data retransmission, where the downlink data retransmission is used for retransmitting downlink data when acknowledge information corresponds to the downlink data is NACK; and
a sending unit configured to send the downlink data retransmission at a position indicated by the interval information so that the UE re-receives the downlink data.

The interval information is determined in one of the following manners:
indicating, by a fifth interval, an interval between a position where downlink data retransmission is sent and a position of the ACK/NACK information corresponding to the downlink data; and
indicating, by a sixth interval, an interval between a position where the downlink data retransmission is sent and a position of last downlink data transmission.

A device for indicating a transmission interval provided by another embodiment of the present disclosure includes:
an interval information determining unit configured to configure or agree with a UE on interval information between sending uplink grant information and sending its corresponding uplink data; and
a sending unit configured to send the uplink data at a position indicated by the interval information so that the base station receives the uplink data.

The interval information is determined in one of the following manners:
indicating, by a seventh interval, an interval between a position where the uplink data is sent and a position of the corresponding uplink grant information.

Another embodiment of the present disclosure further provides a computer-readable storage medium configured to store computer-executable instructions which, when executed by a processor, implement the above-mentioned method for indicating a transmission interval.

In the embodiment of the present disclosure, a base station configures or agrees with a user equipment (UE) on interval information for sending uplink grant information. The uplink grant information is used for performing uplink data retransmission. The uplink grant information is sent at a position indicated by the interval information to schedule the UE to retransmit uplink data. The interval information is determined in one of the following manners: indicating, by a first interval, an interval between a position of the uplink grant information used for performing the uplink data retransmission and a position of last data transmission of the UE; and indicating, by a second interval, an interval between a position of the uplink grant information used for performing the uplink data retransmission and a position of uplink grant information corresponding to last uplink data transmission. The interval information is determined in one of the following manners: indicating, by a third interval, an interval between a position of the ACK/NACK information corresponding to the downlink data transmission and an end position of the downlink data transmission; and indicating, by a fourth interval, an interval between a position of the ACK/NACK information corresponding to the downlink data transmission and a position of the downlink data transmission. The interval information is determined in one of the following manners: indicating, by a fifth interval, an interval between a position where downlink data retransmission is sent and a position of the ACK/NACK information corresponding to the downlink data; and indicating, by a sixth interval, an interval between a position where the downlink data retransmission is sent and a position of last downlink data transmission. The interval information is determined in one of the following manners: indicating, by a seventh interval, an interval between a position where the uplink data is sent and a position of the corresponding uplink grant information. In this way, a manner of indicating interval information for retransmission is provided. The indication of the interval information is more flexible through a signaling design. A mixed transmission of low-latency services and non-low-latency services in the same carrier is implemented, and the timeliness of uplink retransmission of low-latency services is ensured.

Other aspects can be understood after the drawings and detailed description are read and understood.

### BRIEF DESCRIPTION OF DRAWINGS

FIG. 1 is a flowchart 1 of a method for indicating a transmission interval according to an embodiment of the present disclosure;
FIG. 2 is a flowchart 2 of a method for indicating a transmission interval according to the embodiment of the present disclosure;
FIG. 3 is a schematic diagram illustrating an interval between first transmission of uplink data and uplink grant information used for uplink data retransmission according to the embodiment of the present disclosure;
FIG. 4 is a schematic diagram illustrating a removing resource position or a reserved resource position of grant information of uplink retransmission and other transmissions according to an embodiment of the present disclosure;
FIG. 5 is a schematic diagram illustrating an interval between downlink data transmission and transmission of corresponding ACK/NACK information according to an embodiment of the present disclosure;
FIG. 6 is a schematic diagram illustrating an interval between transmission of ACK/NACK information corresponding to downlink data and corresponding downlink data retransmission according to an embodiment of the present disclosure;
FIG. 7 is a flowchart 3 of a method for indicating a transmission interval according to the embodiment of the present disclosure;
FIG. 8 is a flowchart 4 of a method for indicating a transmission interval according to the embodiment of the present disclosure; and
FIG. 9 is a structural diagram of a device for indicating a transmission interval according to an embodiment of the present disclosure.

### DETAILED DESCRIPTION

Embodiments of the present disclosure will be described below in detail in conjunction with the drawings.

The embodiments of the present disclosure implement a mixed transmission of services having different latency requirements in one carrier, especially a mixed transmission of latency sensitive services (that is, low-latency services) and non-low-latency services.

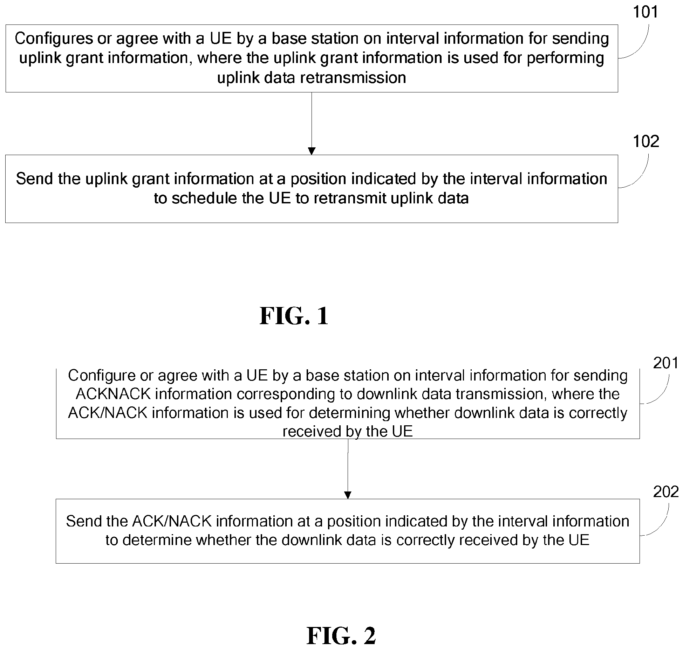

FIG. 1 is a flowchart 1 of a method for indicating a transmission interval according to an embodiment of the present disclosure. As shown in FIG. 1, the method for indicating a transmission interval includes the steps described below.

In step 101, a base station configures or agrees with a UE on interval information for sending uplink grant information. The uplink grant information is used for performing uplink data retransmission.

In step 102, the uplink grant information is sent at a position indicated by the interval information to schedule the UE to retransmit uplink data. The interval information is determined in one of the following manners: indicating, by a first interval, an interval between a position of the uplink grant information used for performing the uplink data retransmission and a position of last data transmission of the UE; and indicating, by a second interval, an interval between a position of the uplink grant information used for performing the uplink data retransmission and a position of uplink grant information corresponding to last uplink data transmission.

In the embodiment of the present disclosure, the first interval is represented by N1+M1, N1 is a positive integer, and M1 is an integer.

The second interval is represented by N2+M2, N2 is a positive integer, and M2 is an integer.

In a process of determining the interval information, when M1 and M2 are positive integers, calculation is performed in a positive time direction, and when M1 and M2 are negative integers, the calculation is performed in a reverse time direction.

In the embodiment of the present disclosure, N1, or N2, or N1+M1, or N2+M2 is used for representing a position of a starting orthogonal frequency division multiplexing (OFDM) symbol of the uplink grant information used for performing the uplink data retransmission. The number of symbols following the position of the starting OFDM symbol is determined in a manner: being agreed by the base station and the UE or being notified to the UE from the base station through signaling.

In the embodiment of the present disclosure, in the first interval, N1 is a total number of scheduling units; and M1 is the number of or serial numbers of OFDM symbols in the scheduling unit indicated by N1, or M1 is the number of or serial numbers of slots in the scheduling unit indicated by N1.

Alternatively, in the first interval, when the first data transmission of the UE is in scheduling unit n (n is a positive integer), the uplink grant information corresponding to the uplink data retransmission is in scheduling unit n+N1. M1 describes a starting OFDM symbol or a starting slot of the uplink grant information corresponding to the uplink data retransmission in the scheduling unit n+N1. The total number of symbols following a position of the starting OFDM symbol is determined in the following manner: being agreed by the base station and the UE, or being notified, by the base station, to the UE through signaling.

In the second interval, N2 is a total number of scheduling units; and M2 is the number of or serial numbers of OFDM symbols in the scheduling unit indicated by N2. Alternatively, M2 is the number of or serial numbers of slots in the scheduling unit indicated by N2.

Alternatively, in the second interval, when the uplink grant information corresponding to the first uplink data transmission of the UE is in scheduling unit n (n is a positive integer), the uplink grant information corresponding to the uplink data retransmission is in scheduling unit n+N2. M2 describes a starting OFDM symbol or a starting slot of the uplink grant information corresponding to the uplink data retransmission in the scheduling unit n+N2.The total number of symbols following a position of the starting OFDM symbol is determined in the manner: being agreed by the base station and the UE, or being notified, by the base station, to the UE through signaling.

In the embodiment of the present disclosure, in the first interval, N1 and M1 are both the total number of scheduling units. In the first interval, when the first data transmission of the UE is in scheduling unit n, the uplink grant information corresponding to the uplink data retransmission is in scheduling unit n+N1+M1.

In the second interval, N2 and M2 are both the total number of scheduling units. In the second interval, when the uplink grant information corresponding to first uplink data transmission of the UE is in scheduling unit n, the uplink grant information corresponding to the uplink data retransmission is in scheduling unit n+N2+M2.

In the embodiment of the present disclosure, when N1 and M1 describe a same object, a sum of N1 and M1 is used by the base station for representing the interval information.

When N2 and M2 describe a same object, a sum of N2 and M2 is used by the base station for representing the interval information.

The scheduling unit is comprised of a plurality of consecutive OFDM symbols and supports different service types.

In the embodiment of the present disclosure, values of N1 and N2 are determined in the following manner: being agreed by the base station and the UE, or being notified, by the base station, to the UE through signaling.

N1 and N2 have a default value, and when the values of N1 and N2 are not agreed on or not notified through the signaling, the default value of N1 and N2 is used.

In the embodiment of the present disclosure, the default value of N1 and N2 is K, and a value of K is different depending on a processing latency for decoding by the UE.

In the embodiment of the present disclosure, M1 and M2 are notified to the UE through signaling. M1 is an offset from a position of the scheduling unit indicated by N1. M2 is an offset from a position of the scheduling unit indicated by N2.

In the embodiment of the present disclosure, values of N1 and N2 are processed in one of the manners described below.

A value of N1 or N2 is a cell-level parameter, and values of N1 or N2 in interval information of all UEs in a same cell are the same.

The value of N1 or N2 is a service-level parameter, and values of N1 or N2 in interval information of UEs of a same service type are the same.

The value of N1 or N2 is a UE-level parameter. N1 or N2 in interval information of each UE corresponds to one value. Values of N1 or N2 in interval information of different UEs may be the same or different.

In the embodiment of the present disclosure, when the base station performs downlink transmission according to an OFDM symbol determined by N1+M1 or N2+M2, the base station uses a resource position configured by the base station or agreed on by the base station with the UE to send the uplink grant information for performing the uplink data retransmission, and the downlink transmission is not able to be performed at the resource position.

In the embodiment of the present disclosure, the agreed resource position is as described below. The base station agrees to reserve a part of subcarriers in the OFDM symbol to transmit the uplink grant information for performing the uplink data retransmission. A reservation rule is agreed on by the base station and the UE which receives the uplink grant information for performing the uplink data retransmission. Alternatively, the base station and the UE agree to reserve all subcarriers in the OFDM symbol to transmit the uplink grant information for performing the uplink data retransmission.

Alternatively, the agreed resource position is as described below. The base station and the UE agree to remove original uplink grant information, from downlink transmission, for performing the uplink data retransmission in the OFDM symbol. The removing rule is agreed on by the UE which receives the uplink grant information for performing the uplink data retransmission. Or the base station and the UE agree to reserve the all subcarriers in the OFDM symbol to transmit the uplink grant information for performing the uplink data retransmission.

In the embodiment of the present disclosure, the reservation rule or the removing rule includes performing reservation or removing according to a principle that subcarriers are reserved at equal intervals from a starting subcarrier when the downlink transmission and the uplink grant information used for performing the uplink data retransmission use a same subcarrier spacing or same OFDM symbol duration. The subcarrier spacing is, or the starting subcarrier is, or the subcarrier spacing and the starting subcarrier are configured by the base station or agreed on by the base station and the UE.

In the embodiment of the present disclosure, the reservation rule or the removing rule includes performing reservation or removing according to a principle that consecutive subcarriers are reserved. A position of the consecutive subcarriers is configured by the base station or agreed on by the base station with the UE or obtained by a calculation of known parameters according to a known algorithm.

In the embodiment of the present disclosure, when the downlink transmission and the uplink grant information used for performing the uplink data retransmission use different subcarrier spacings, the reservation rule or the removing rule includes: performing reservation or removing according to a principle that a number of reserved OFDM symbols is at least one OFDM symbol corresponding to the downlink transmission; or performing the reservation or the removing according to a principle that the number of reserved OFDM symbols is at least one OFDM symbol corresponding to the uplink grant information used for performing the uplink data retransmission.

In the embodiment of the present disclosure, when the base station configures a value of N1+M1, or N2+M2, or M1, or M2, one of the conditions described below is met.

An OFDM symbol used by the uplink grant information for performing the uplink data retransmission is an OFDM symbol of downlink control after an end of first data transmission of the UE.

The OFDM symbol used by the uplink grant information for performing the uplink data retransmission is an OFDM symbol of the downlink control after an interval of N1 or an interval of N2.

The OFDM symbol used by the uplink grant information for performing the uplink data retransmission is an OFDM symbol of the downlink control.

The OFDM symbol used by the uplink grant information for performing the uplink data retransmission is an OFDM symbol of downlink data. The downlink control is downlink control of a low-latency service.

FIG. 2 is a flowchart 2 of a method for indicating a transmission interval according to an embodiment of the present disclosure. As shown in FIG. 2, the method for indicating a transmission interval includes the steps described below.

In step 201, a base station configures or agrees with a UE on interval information for sending acknowledgement information ACK/ NACK corresponding to downlink data transmission. The ACK/NACK information is used for determining whether downlink data is correctly received by the UE.

In step 202, the ACK/NACK information is sent at a position indicated by the interval information to determine whether the downlink data is correctly received by the UE. The interval information is determined in one of the following manners: indicating, by a third interval, an interval between a position of the ACK/NACK information corresponding to the downlink data transmission and an end position of the downlink data transmission; and indicating, by a fourth interval, an interval between a position of the ACK/NACK information corresponding to the downlink data transmission and a position of the downlink data transmission.

In the embodiment of the present disclosure, the third interval is represented by N3+M3, N3 is a positive integer, and M3 is an integer.

The fourth interval is represented by N4+M4, N4 is a positive integer, and M4 is an integer.

In a process of determining the interval information, when M3 and M4 are positive integers, calculation is performed in a positive time direction, and when M3 and M4 are negative integers, the calculation is performed in a reverse time direction.

In the embodiment of the present disclosure, N3, or N4, or N3+M3, or N4+M4 is used for representing a starting orthogonal frequency division multiplexing (OFDM) symbol position of the ACK/NACK information corresponding to the downlink data transmission. The total number of symbols following the position of the starting OFDM symbol is determined in the following manner: being agreed by the base station and the UE, or being notified, by the base station, to the UE through signaling.

In the embodiment of the present disclosure, in the third interval, N3 is the total number of scheduling units; and M3 is the number of or serial numbers of OFDM symbols in the scheduling unit indicated by N3, or M3 is the number of or serial numbers of slots in the scheduling unit indicated by N3.

Alternatively, in the third interval, when a scheduling unit immediately after the downlink data transmission of the UE is scheduling unit n (n is a positive integer), the ACK/NACK information corresponding to the downlink data transmission is in scheduling unit n+N3. M3 describes a starting OFDM symbol or a starting slot of the ACK/NACK information in the scheduling unit n+N3. The total number of symbols following a position of the starting OFDM symbol is determined in the following manner: being agreed by the base station and the UE, or being notified, by the base station, to the UE through signaling.

In the fourth interval, N4 is the total number of scheduling units; and M4 is the number of or serial numbers of OFDM symbols in the scheduling unit indicated by N4. Alternatively, M4 is the number of or serial numbers of slots in the scheduling unit indicated by N4.

Alternatively, in the fourth interval, when the downlink data transmission of the UE is in scheduling unit n (n is a positive integer), the ACK/NACK information corresponding to the downlink data transmission is in scheduling unit n+N4. M4 describes a starting OFDM symbol or a starting slot of the ACK/NACK information in the scheduling unit n+N4.The total number of symbols following a position of the starting OFDM symbol is determined in the manner: being agreed by the base station and the UE, or being notified, by the base station, to the UE through signaling.

In the embodiment of the present disclosure, in the third interval, N3 and M3 are both the total number of scheduling units. In the third interval, when a scheduling unit immediately after the downlink data transmission of the UE is scheduling unit n, the ACK/NACK information corresponding to the downlink data transmission is in scheduling unit n+N3+M3.

In the fourth interval, N4 and M4 are both the total number of scheduling units. In the fourth interval, when the downlink data transmission of the UE is in scheduling unit n, the ACK/NACK information corresponding to the downlink data transmission is in scheduling unit n+N4+M4.

In the embodiment of the present disclosure, when N3 and M3 describe a same object, a sum of N3 and M3 is used by the base station for representing the interval information.

When N4 and M4 describe a same object, a sum of N4 and M4 is used by the base station for representing the interval information.

The scheduling unit is comprised of a plurality of consecutive OFDM symbols and supports different service types.

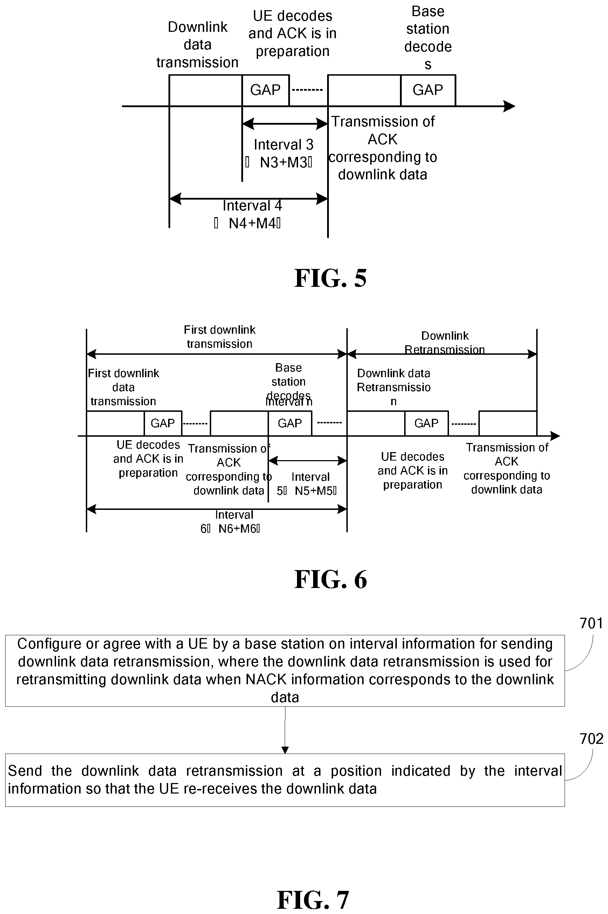

FIG. 7 is a flowchart 3 of a method for indicating a transmission interval according to an embodiment of the present disclosure. As shown in FIG. 7, the method for indicating a transmission interval includes the steps described below.

In step 701, a base station configures or agrees with a UE on interval information for sending downlink data retransmission. The downlink data retransmission is used for retransmitting downlink data when the acknowledge information corresponds to the downlink data is NACK. In step 702, the downlink data retransmission is sent at a position indicated by the interval information so that the UE re-receives the downlink data. The interval information is determined in one of the following manners: indicating, by a fifth interval, an interval between a position where downlink data retransmission is sent and a position of the acknowledge information corresponding to the downlink data; and indicating, by a sixth interval, an interval between a position where the downlink data retransmission is sent and a position of last downlink data transmission.

In the embodiment of the present disclosure, the fifth interval is represented by N5+M5, N5 is a positive integer, and M5 is an integer.

The sixth interval is represented by N6+M6, N6 is a positive integer, and M6 is an integer.

In a process of determining the interval information, when M5 and M6 are positive values, calculation is performed in a positive time direction, and when M5 and M6 are negative values, the calculation is performed in a reverse time direction.

In the embodiment of the present disclosure, N5, or N6, or N5+M5, or N6+M6 is used for representing a position of a starting orthogonal frequency division multiplexing (OFDM) symbol of the downlink data retransmission. The total number of symbols following the position of the starting OFDM symbol is determined in the following manner: being agreed by the base station and the UE or being notified, by the base station, to the UE through signaling. In the embodiment of the present disclosure, in the fifth interval, N5 is the total number of scheduling units; and M5 is the number of or serial numbers of OFDM symbols in the scheduling unit indicated by N5. Alternatively, M5 is the number of or serial numbers of slots in the scheduling unit indicated by N5.

Alternatively, in the fifth interval, when the acknowledge information corresponding to the downlink data is in scheduling unit n (n is a positive integer), the downlink data retransmission is in scheduling unit n+N5. M5 describes a starting OFDM symbol or a starting slot of the downlink data retransmission in the scheduling unit n+N5. The total number of symbols following a position of the starting OFDM symbol is determined in the following manner: being agreed by the base station and the UE, or being notified, by the base station, to the UE through signaling.

In the sixth interval, N6 is the total number of scheduling units; and M6 is the number of or serial numbers of OFDM symbols in the scheduling unit indicated by N6. Alternatively, M6 is the number of or serial numbers of slots in the scheduling unit indicated by N6.

Alternatively, in the sixth interval, when the last downlink data transmission is in scheduling unit n (n is a positive integer), the downlink data retransmission is in scheduling unit n+N6. M6 describes a starting OFDM symbol or a starting slot of the downlink data retransmission in the scheduling unit n+N6. The total number of symbols following a position of the starting OFDM symbol is determined in the manner: being agreed by the base station and the UE, or being notified, by the base station, to the UE through signaling.

In the embodiment of the present disclosure, in the fifth interval, N5 and M5 are both the total number of scheduling units. In the fifth interval, when the acknowledge information corresponding to the downlink data is in scheduling unit n, the downlink data retransmission is in scheduling unit n+N5+M5.

In the sixth interval, N6 and M6 are both the total number of scheduling units. In the sixth interval, when the last downlink data transmission is in scheduling unit n, the downlink data retransmission is in scheduling unit n+N6+M6.

In the embodiment of the present disclosure, when N5 and M5 describe a same object, a sum of N5 and M5 is used by the base station for representing the interval information.

When N6 and M6 describe a same object, a sum of N6 and M6 is used by the base station for representing the interval information.

The scheduling unit is comprised of a plurality of consecutive OFDM symbols and supports different service types.

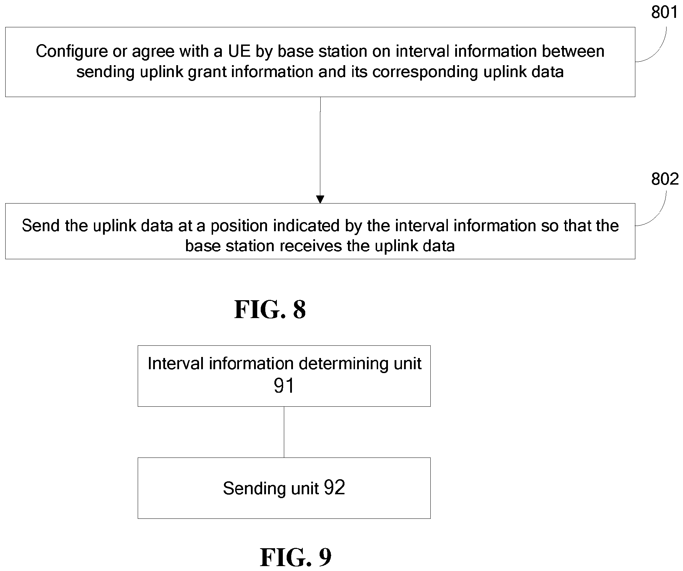

FIG. 8 is a flowchart 4 of a method for indicating a transmission interval according to an embodiment of the present disclosure. As shown in FIG. 8, the method for indicating a transmission interval includes the steps described below.

In step 801, a base station configures or agrees with a UE on interval information between sending uplink grant information and sending its corresponding uplink data.

In step 802, the uplink data is sent at a position indicated by the interval information so that the base station receives the uplink data. The interval information is determined in one of the following manners: indicating, by a seventh interval, an interval between a position where the uplink data is sent and a position of the corresponding uplink grant information.

For example, N7 means that the uplink grant information is sent in scheduling unit n and the corresponding uplink data is sent in scheduling unit n+N7. M7 is used to describe an OFDM symbol (which may also be a slot, for example, a scheduling unit includes several slots and each slot includes several OFDM symbols), in the scheduling unit n+N7, from which the uplink data is sent. The total number of symbols following a position of the starting OFDM symbol is determined in the manner: being agreed by the base station and the UE, or being notified, by the base station, to the UE through signaling.

The following is the case where both N7 and M7 describe the scheduling unit.

For example, N7 and M7 mean that the uplink grant information is sent in scheduling unit n and the uplink data corresponding to the uplink grant information is sent is scheduling unit n+N7+M7.

The above-mentioned interval 7 may also be used when the uplink grant information is retransmitted and when the uplink data corresponding to the retransmitted uplink grant information is retransmitted. See below:
The following is N7 describing the scheduling unit, and M7 describes the starting OFDM symbol in the scheduling unit described by N7. For example, N7 means that retransmitted uplink grant information is sent in scheduling unit n and the corresponding uplink data is sent in scheduling unit n+N7. M7 is used to describe an OFDM symbol (which may also be a slot, for example, a scheduling unit includes several slots and each slot includes several OFDM symbols), in the scheduling unit n+N7, from which the uplink data corresponding to the retransmitted uplink grant information is sent. The total number of symbols following a position of the starting OFDM symbol is determined in the manner: being agreed by the base station and the UE, or being notified, by the base station, to the UE through signaling.

In the embodiment of the present disclosure, the seventh interval is represented by N7+M7, N7 is a positive integer, and M7 is an integer.

In a process of determining the interval information, when M7 is a positive value, calculation is performed in a positive time direction, and when M7 is a negative value, the calculation is performed in a reverse time direction.

In the embodiment of the present disclosure, N7 or N7+M7 (which represents that N7 and M7 work at the same time, and if M7 is not sent, only N7 is sent, which is similar in other embodiments) is used for representing a position of a starting orthogonal frequency division multiplexing (OFDM) symbol of the uplink data corresponding to the uplink grant information. The total number of symbols following the position of the starting OFDM symbol is determined in a manner: being agreed by the base station and the UE or being notified, by the base station, to the UE through signaling.

In the embodiment of the present disclosure, M7 is the number of or serial numbers of OFDM symbols in a scheduling unit indicated by N7, or M7 is the number of or serial numbers of slots in the scheduling unit indicated by N7.

Alternatively, in the seventh interval, when the uplink grant information is sent in scheduling unit n (n is a positive integer), the corresponding uplink data is in scheduling unit n+N7. M7 describes a starting OFDM symbol or a starting slot of the uplink data in the scheduling unit n+N7. The total number of symbols following a position of the starting OFDM symbol is determined in the manner: being agreed by the base station and the UE, or being notified, by the base station, to the UE through signaling.

In the embodiment of the present disclosure, in the seventh interval, N7 and M7 are both the total number of scheduling units. In the seventh interval, when the uplink grant information is sent in scheduling unit n, the uplink data corresponding to the uplink grant information is sent in scheduling unit n+N7+M7.

In the embodiment of the present disclosure, when N7 and M7 describe a same object, a sum of N7 and M7 is used by the base station for representing the interval information.

The scheduling unit is comprised of a plurality of consecutive OFDM symbols and supports different service types.

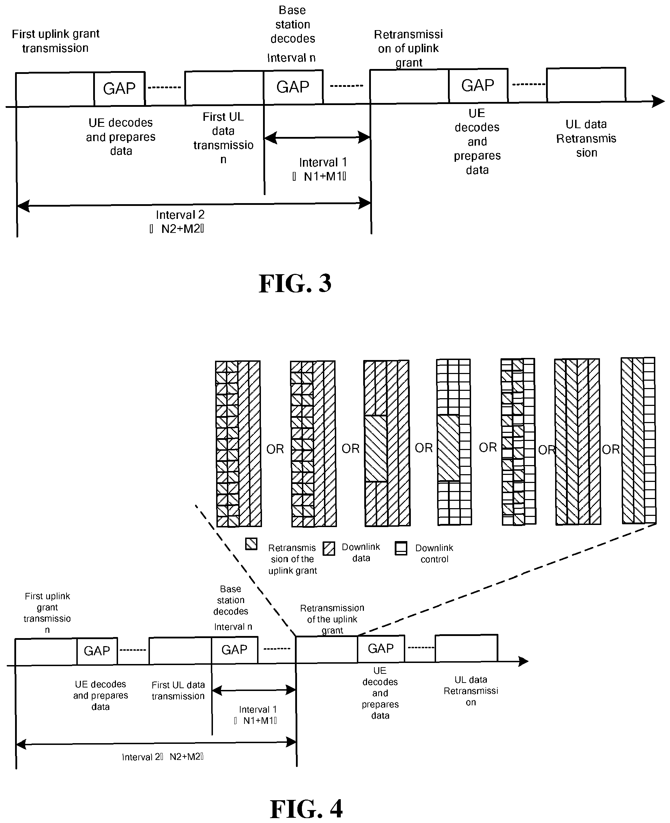

FIG. 3 is a schematic diagram illustrating an interval between first transmission of uplink data and uplink grant information used for uplink data retransmission according to an embodiment of the present disclosure. In FIG. 3, only the configuration of the intervals and the relative position in the time direction are illustrated. In fact, in FIG. 3, the transmission of the low-latency services and the other non-low-latency services in the frequency domain direction are frequency-division or time-division. Therefore, when the uplink grant information corresponding to the uplink retransmission is sent, it is not easy to determine whether other non-low-latency services are transmitted when the uplink grant information is sent. In this case, in consideration of the latency requirement of the low-latency service retransmission, a manner of removing or reserving a part of resources for non-low latency services is designed to transmit the uplink grant information to the UE.

In the present application, although the physical meanings of each parameter, from parameter N1 to N7, are different, the transmission, configuration, description principle of the interval and usage manner of each parameter are the same. The focus is on N1 as an example for description herein. Parameters N2 to N7 have the same transmission manner or agreed usage manner as N1.The physical meanings of each parameter, from parameter M1 to M7, are different, but the transmission, configuration, description principle of the interval and usage manner of each parameter are the same. The focus is on M1 as an example for description herein. Parameters M2 to M7 have the same transmission manner or agreed usage manner as M1, and repetition will not be made here.

### Embodiment 1

A manner of determining an interval is provided. Appropriate interval may be selected for use according to different rules.

In a case, the system determines that the low-latency service is scheduled to transmit according to the fixed scheduling unit duration, for example, the low-latency scheduling unit has a fixed duration of 7 or 14 OFDM symbols (in this case, the duration of OFDM symbols is converted according to the subcarrier spacing used by the low-latency service, and the general duration is small).The end of the low latency service transmission is always at the end of the scheduling unit so that the exact end position is always known when the base station schedules a low-latency service each time. In this way, the interval 2, N2+M2 is preferentially used to describe the interval (in this case, N2+M2 may also be regarded as a parameter, and the interval 1 may also be used).

In a case, in the system, the low-latency service is allowed to be transmitted from any OFDM symbol, and the transmission duration is configured by control signaling. At this time, it is recommended to prioritize use of the interval 1, N1+M1 (in this case, N1 + M1 may also be regarded as a parameter, and the interval 2 may also be used).

The interval 1 describes an interval between a position of the uplink grant information used for performing the uplink data retransmission and an end position of first data transmission of the UE, and the interval is described as ( N1+M1). N1 is a positive integer and M1 is an integer. The interval 2 describes an interval between a position of the uplink grant information used for performing the uplink data retransmission and an end position of uplink grant information corresponding to the first transmission of the uplink data, and the interval is described as (N2+M2). N2 is a positive integer and M2 is an integer.

When M1 and M2 are positive values, calculation is performed in a positive time direction, and when M1 and M2 are negative values, the calculation is performed in a reverse time direction.

### Embodiment 2

Based on the embodiment 1, the interval 1 is taken as an example for description, and the interval 2 also uses the same principle.

N1 and M1, as two parameters, in the interval 1 are separately configured.

The configuration of N1 is first described (N2 has the same configuration). For example, N1 is configured and sent through higher-layer signaling, or is directly agreed as a fixed value. The higher-layer signaling such as a radio resource control (RRC) message is used. The RRC message includes a UE-level RRC message and a broadcast type RRC message. Common signaling, such as signaling similar to common downlink or uplink grant information (i.e., similar to downlink control information (DCI) in LTE), of the physical layer may also be used. When the UE-level RRC message is used, different intervals 1 may be configured for different UEs. This manner is not conducive to resource utilization, but may also be inevitable. When capabilities of different UEs differ, the respective interval 1 is different due to the different capabilities of the UEs. It may be considered to use a UE group. For example, multiple UEs with the same capability form a UE group, and the UE group uses the same interval 1.The sending end may send the parameter of the interval 1 to the UE in a manner: the downlink or uplink grant information in the UE group is scrambled by the radio network tempory identity (RNTI).

When the cell broadcast type RRC message, such as cell system broadcast information, is used, the broadcast interval 1 is valid for all low-latency services in the cell. A use of the physical layer common signaling is similar, that is, the common RNTI is used to scramble the downlink or uplink grant information so that the interval 1 is sent, and then all the UEs having low-latency services in the cell need to know this information.

N1 may also be agreed to be a fixed value. In this case, N1 may take a value according to the time corresponding to the average processing capability of the UE, and then the starting OFDM symbol position may be dynamically adjusted through M1.

M1 is usually dynamically notified using physical layer signaling, and may be sent to the UE in the uplink grant information. For example, a value of M1 of the interval 1 is sent in the first (or last) uplink grant information.

### Embodiment 3

The value of N1, M1, N2, or M2 may be configured in the manner described below, whether for the interval 1 or the interval 2 in the above embodiments.

N1 and N2 are configured through higher-layer signaling, and a semi-static change mode is adopted. However, N1 and N2 may also be dynamically modified through physical layer signaling to take effect in time. For example, after the value of N1 is configured through the higher-layer signaling, N1 is always valid before a new value is configured. However, if the base station also configures the value of N1 through the physical layer signaling, the receiving end (UE) needs to use the value of N1 configured through the physical layer signaling for subsequent processing of the current operation. At the next time, if N1 is not configured through the physical layer signaling, the UE still takes the N1 notified by the previous higher-layer signaling for use.

That is to say, when the value of N1 is configured through both the higher-layer signaling and the physical layer signaling, the UE and the base station agree that the value of N1 configured through the physical layer signaling is used, and is only valid for subsequent processing of the current operation.

N1 and N2 may also be fixed in a manner agreed by the base station and the UE in advance.

Similarly, when the values of N1 and N2 are notified through the physical layer signaling, the UE uses the values of N1 and N2 notified through the physical layer signaling to perform the subsequent processing of the current operation.

N2 may also be similarly processed as described above.

M1 and M2 are configured through the physical layer signaling.

In the embodiment, N1, M1, N2, and M2 describe a scheduling unit or a symbol position.

### Embodiment 4

The embodiment further clarifies the usage manner of the interval 1 and the interval 2.

When the interval 1 or the interval 2 is used, N1 or N2 describes the total number of scheduling units. M1 or M2 describes the OFDM symbol position in the last of the scheduling units indicated by N1 or N2.

For example, N1 is used to mean that the first data transmission of the UE is in scheduling unit n and the uplink grant information used for performing the uplink data retransmission is in scheduling unit n+N1. M1 is used to describe an OFDM symbol (which may also be a slot, for example, a scheduling unit includes several slots and each slot includes several OFDM symbols), in the scheduling unit n+N1, from which the uplink grant information used for performing the uplink data retransmission is sent.

For example, N2 is used to mean that the uplink grant information corresponding to the first uplink data transmission of the UE is in scheduling unit n, and the uplink grant information for performing the uplink data retransmission is in scheduling unit n+N2. M2 is used to describe an OFDM symbol (which may also be a slot, for example, a scheduling unit includes several slots and each slot includes several OFDM symbols), in the scheduling unit n+N2, from which the uplink grant information used for performing the uplink data retransmission is sent.

The following is the case where both the interval 1 and the interval 2 describe the scheduling unit.

For example, N1 and M1 mean that the first data transmission of the UE is in scheduling unit n, and that the uplink grant information used for performing the uplink data retransmission is in scheduling unit n+N1+M1.

For example, N2 and M2 mean that the uplink grant information corresponding to the first uplink data transmission of the UE is in scheduling unit n, and the uplink grant information for performing the uplink data retransmission is in scheduling unit n+N2+M2.

### Embodiment 5

Referring to FIG. 5, the embodiment provides an indication of an interval 3 and an interval 4 between downlink data transmission and corresponding ACK/NACK transmission. A method used is similar to the method used in the embodiments 1, 2, 3, and 4, the object described by the interval has changed, and transmission of the parameter describing the interval is the same as the transmission of the interval 1 and the interval 2 in the embodiments 1, 2, 3, and 4.

N3 and M3 of the interval 3, and N4 and M4 of the interval 4 are defined as follows.

When the interval 3 or the interval 4 is used, N3 or N4 describes the total number of scheduling units. M3 or M4 describes the OFDM symbol position in the last of the scheduling units indicated by N3 or N4.

For example, N3 means that the scheduling unit immediately after the downlink data transmission of the UE is scheduling unit n, and the ACK/NACK corresponding to the downlink data transmission is in scheduling unit n+N3. M3 is used to describe an OFDM symbol (which may also be a slot, for example, a scheduling unit includes several slots and each slot includes several OFDM symbols), in the scheduling unit n+N3, from which the ACK/NACK is sent.

For example, N4 means that the downlink data transmission of the UE is in scheduling unit n, and the ACK/NACK corresponding to the downlink data is in scheduling unit n+N4. M4 is used to describe an OFDM symbol (which may also be a slot, for example, a scheduling unit includes several slots and each slot includes several OFDM symbols), in the scheduling unit n+N4, from which the ACK/NACK is sent.

The following is the case where both the interval 3 and the interval 4 describe the scheduling unit.

For another example, N3 and M3 mean that the scheduling unit immediately after the downlink data transmission of the UE is scheduling unit n, and the ACK/NACK corresponding to the downlink data transmission of the UE is in scheduling unit n+N3+M3.

For another example, N4 and M4 mean that the downlink data transmission of the UE is in scheduling unit n, and the ACK/NACK corresponding to the downlink data transmission of the UE is in scheduling unit n+N4+M4.

N3, N4, M3, and M4 have the same processing of values, transmission modes, and simultaneous transmission through higher-layer signaling and physical layer signaling as N1, N2, M1, and M2, and repetition is not made here.

### Embodiment 6

Referring to FIG. 6, the embodiment provides an indication of an interval 5 and an interval 6 between ACK/NACK corresponding to downlink data transmission and downlink data retransmission. A method used is similar to the method used in the embodiments 1, 2, 3, and 4, the object described by the interval has changed, and transmission of the parameter describing the interval is the same as the transmission of the interval 1 and the interval 2 in the embodiments 1, 2, 3, and 4.

N5 and M5 of the interval 5, and N6 and M6 of the interval 6 are defined as follows.

When the interval 5 or the interval 6 is used, N5 or N6 describes the total number of scheduling units. M5 or M6 describes the OFDM symbol position in the last of the scheduling units indicated by N5 or N6.

For example, N5 means that transmission of the ACK/NACK corresponding to the downlink data is in scheduling unit n, and the downlink data retransmission is in scheduling unit n+N5. M5 is used to describe an OFDM symbol (which may also be a slot, for example, a scheduling unit includes several slots and each slot includes several OFDM symbols), in the scheduling unit n+N5, from which the downlink data retransmission is sent.

For example, N6 means that the first transmission of the downlink data is in scheduling unit n, and the retransmission of the downlink data (if any) is in scheduling unit n+N6. M6 is used to describe an OFDM symbol (which may also be a slot, for example, a scheduling unit includes several slots and each slot includes several OFDM symbols), in the scheduling unit n+N6, from which the retransmission of the downlink data is sent.

The following is the case where both the interval 5 and the interval 6 describe the scheduling unit.

For another example, N5 and M5 mean that the ACK/NACK corresponding to the downlink data transmission is in scheduling unit n, and the downlink data retransmission of the UE is in scheduling unit n+N5+M5.

For another example, N6 and M6 mean that the first transmission of the downlink data is in scheduling unit n, and the retransmission of the downlink data (if any) is in scheduling unit n+N6+M6.

N5, N6, M5, and M6 have the same processing of values, transmission modes, and simultaneous transmission through higher-layer signaling and physical layer signaling as N1, N2, M1, and M2, and repetition is not made here.

### Embodiment 7

The embodiment 7 further provides an indication between a moment when the uplink grant information is sent and a moment when the corresponding uplink data is sent. For example, an interval 7 defines N7 and M7, and the functions of N7 and M7 are similar to those of the other embodiments described above.

The following is N7 describing the scheduling unit, and M7 describes the starting OFDM symbol in the scheduling unit described by N7.

For example, N7 means that the uplink grant information is sent in scheduling unit n, and the corresponding uplink data is sent in scheduling unit n+N7. M7 is used to describe an OFDM symbol (which may also be a slot, for example, a scheduling unit includes several slots and each slot includes several OFDM symbols), in the scheduling unit n+N7, from which the uplink data is sent.

The following is the case where both N7 and M7 describe the scheduling unit.

For example, N7 and M7 mean that the uplink grant information is sent is scheduling unit n, and the uplink data corresponding to the uplink grant information is sent in scheduling unit n+N7+M7.

The above-mentioned interval 7 may also be used when the uplink grant information is retransmitted and when the uplink data corresponding to the retransmitted uplink grant information is retransmitted. See below:
The following is N7 describing the scheduling unit, and M7 describes the starting OFDM symbol in the scheduling unit described by N7. For example, N7 means that the retransmitted uplink grant information is sent is scheduling unit n, and the corresponding uplink data is sent in scheduling unit n+N7. M7 is used to describe an OFDM symbol (which may also be a slot, for example, a scheduling unit includes several slots and each slot includes several OFDM symbols), in the scheduling unit n+N7, from which the uplink data corresponding to the retransmitted uplink grant information is sent.

The following is the case where both N7 and M7 describe the scheduling unit. For example, N7 and M7 mean that the uplink grant information is retransmitted in scheduling unit n, and the uplink data corresponding to the retransmitted uplink grant information is sent in scheduling unit n+N7+M7.

### Embodiment 8

The embodiment is mainly based on FIG. 4. FIG. 4 illustrates a manner of puncturing of other service data or controls in various situations.

When a service is very demanding for latency and the base station cannot predict the time when such service data arrives, the above embodiments may also be used for this type of services to transmit data or control of different situations.

For example, low-latency services need to be transmitted on certain subcarrier resources (i.e., used to retransmit uplink grants) at the position indicated by N1 and M1. These resources are originally intended to transmit data or control of other service types, so the base station removes data or control of other service types originally intended to be transmitted on the subcarrier resources, and directly uses the subcarrier resources to transmit the foregoing low latency services (for example, the uplink grant is retransmission).

N1 and M1 indicate a resource in the time direction. For a frequency domain resource, such as a subcarrier resource, the position and size of the subcarrier resource may be agreed in advance, or all subcarrier resources may be directly used. That is, low-latency data transmission is performed from the resource in the time direction indicated by N1 and M1 by occupying a positive bandwidth according to the subcarrier spacing of the low-latency service. For example, the low-latency service is sent from the starting position of the low-latency service indicated by N1 and M1 according to the subcarrier spacing of the low-latency service. Generally, for the low latency service, the subcarrier spacing is relatively large, and the OFDM symbol duration is short.

In the above embodiments, for the transmission of other types of data, such as the service data transmission described by N2 to N7 and M2 to M7, a similar puncturing transmission may also be performed. The principle is the same as the principle in the embodiment 8.Details are not described here again.

In all of the above embodiments, the uplink or downlink grant information retransmission and the uplink or downlink data retransmission may be the first retransmission or the second, third, fourth or even more times of retransmissions. In the above embodiment, only the first retransmission of the uplink or downlink grant information and the first retransmission of the uplink or downlink data are taken as an example.

In the present application, although the physical meanings of each parameter, from parameter N1 to N7, are different, the transmission, configuration, description principle of the interval and usage manner of each parameter are the same. The focus is on N1 as an example for description herein. Parameters N2 to N7 have the same transmission manner or agreed usage manner as N1. The physical meanings of each parameter, from parameter M1 to M7, are different, but the transmission, configuration, description principle of the interval and usage manner of each parameter are the same. The focus is on M1 as an example for description herein. Parameters M2 to M7 have the same transmission manner or agreed usage manner as M1, and repetition will not be made here.

FIG. 9 is a structural diagram of a device for indicating a transmission interval according to an embodiment of the present disclosure. The device for indicating a transmission interval in this example is applied to a base station.

In the first implementation mode of the present disclosure, the device for indicating a transmission interval includes an interval information determining unit 91 and a sending unit 92. The interval information determining unit 91 is configured to configure or agree with a UE on interval information for sending uplink grant information. The uplink grant information is used for performing uplink data retransmission.

The sending unit 92 is configured to send the uplink grant information at a position indicated by the interval information to schedule the UE to retransmit uplink data.

The interval information is determined in one of the manners described below.

A first interval is used to indicate an interval between a position of the uplink grant information used for performing the uplink data retransmission and a position of last data transmission of the UE.

A second interval is used to indicate an interval between a position of the uplink grant information used for performing the uplink data retransmission and a position of uplink grant information corresponding to last uplink data transmission.

In the embodiment of the present disclosure, the first interval is represented by N1+M1, N1 is a positive integer, and M1 is an integer.

The second interval is represented by N2+M2, N2 is a positive integer, and M2 is an integer.

In a process of determining the interval information, when M1 and M2 are positive integers, calculation is performed in a positive time direction, and when M1 and M2 are negative integers, the calculation is performed in a reverse time direction.

In the embodiment of the present disclosure, N1, or N2, or N1+M1, or N2+M2 is used for representing a position of a starting orthogonal frequency division multiplexing (OFDM) symbol of the uplink grant information used for performing the uplink data retransmission. The total number of symbols following the position of the starting OFDM symbol is determined in the following manner: being agreed by the base station and the UE, or being notified to the UE from the base station through signaling.

In the embodiment of the present disclosure, in the first interval, N1 is the total number of scheduling units; and M1 is the number of or serial numbers of OFDM symbols in a scheduling unit indicated by N1. Alternatively, M1 is the number of or serial numbers of slots in the scheduling unit indicated by N1.

Alternatively, in the first interval, when the first data transmission of the UE is in scheduling unit n (n is a positive integer), the uplink grant information corresponding to the uplink data retransmission is in scheduling unit n+N1. M1 describes a starting OFDM symbol or a starting slot of the uplink grant information corresponding to the uplink data retransmission in the scheduling unit n+N1. The total number of symbols following a position of the starting OFDM symbol is determined in a manner: being agreed by the base station and the UE, or being notified, by the base station, to the UE through signaling.

In the second interval, N2 is the total number of scheduling units; and M2 is the number of or serial numbers of OFDM symbols in a scheduling unit indicated by N2. Alternatively, M2 is the number of or serial numbers of slots in the scheduling unit indicated by N2.

Alternatively, in the second interval, when the uplink grant information corresponding to the first uplink data transmission of the UE is in scheduling unit n (n is a positive integer), the uplink grant information corresponding to the uplink data retransmission is in scheduling unit n+N2. M2 describes a starting OFDM symbol or a starting slot of the uplink grant information corresponding to the uplink data retransmission in the scheduling unit n+N2. The total number of symbols following a position of the starting OFDM symbol is determined in the manner: being agreed by the base station and the UE, or being notified, by the base station, to the UE through signaling.

In the embodiment of the present disclosure, in the first interval, N1 and M1 are both the total number of scheduling units. In the first interval, when the first data transmission of the UE is in scheduling unit n, the uplink grant information corresponding to the uplink data retransmission is in scheduling unit n+N1+M1.

in the second interval, N2 and M2 are both the total number of scheduling units; and in the second interval, when the uplink grant information corresponding to first uplink data transmission of the UE is in scheduling unit n, the uplink grant information corresponding to the uplink data retransmission is in scheduling unit n+N2+M2.

In the embodiment of the present disclosure, when N1 and M1 describe a same object, a sum of N1 and M1 is used by the base station for representing the interval information.

When N2 and M2 describe a same object, a sum of N2 and M2 is used by the base station for representing the interval information.

The scheduling unit is comprised of a plurality of consecutive OFDM symbols and supports different service types.

In the embodiment of the present disclosure, values of N1 and N2 are determined in the following manner: being agreed by the base station and the UE, or being notified, by the base station, to the UE through signaling.

N1 and N2 have a default value, and when the values of N1 and N2 are not agreed on or not notified through the signaling, the default value of N1 and N2 is used.

In the embodiment of the present disclosure, the default value of N1 and N2 is K, and a value of K is different depending on a processing latency for decoding by the UE.

In the embodiment of the present disclosure, M1 and M2 are notified to the UE through signaling. M1 is an offset from a position of a scheduling unit indicated by N1. M2 is an offset from a position of a scheduling unit indicated by N2.

In the embodiment of the present disclosure, values of N1 and N2 are processed in one of the manners described below.

A value of N1 or N2 is a cell-level parameter, and values of N1 or N2 in interval information of all UEs in a same cell are the same.

The value of N1 or N2 is a service-level parameter, and values of N1 or N2 in interval information of UEs of a same service type are the same.

The value of N1 or N2 is a UE-level parameter. N1 or N2 in interval information of each UE corresponds to one value. Values of N1 or N2 in interval information of different UEs may be the same or different.

In the embodiment of the present disclosure, the sending unit 92 is further configured to use a resource position configured by a base station or agreed on by the base station with the UE to send the uplink grant information for performing the uplink data retransmission when the base station performs downlink transmission according to an OFDM symbol determined by N1+M1 or N2+M2, and the downlink transmission is not able to be performed at the resource position. In the embodiment of the present disclosure, the agreed resource position is as described below. The base station agrees to reserve a part of subcarriers in the OFDM symbol to transmit the uplink grant information for performing the uplink data retransmission. A reservation rule is agreed on by the UE which receives the uplink grant information for performing the uplink data retransmission. Or, the base station and the UE agree to reserve all subcarriers in the OFDM symbol to transmit the uplink grant information for performing the uplink data retransmission. Alternatively, the agreed resource position is as described below. The base station and the UE agree to remove original uplink grant information, from downlink transmission, for performing the uplink data retransmission in the OFDM symbol. The removing rule is agreed on by the UE which receives the uplink grant information for performing the uplink data retransmission. Or the base station and the UE agree to reserve the all subcarriers in the OFDM symbol to transmit the uplink grant information for performing the uplink data retransmission.

In the embodiment of the present disclosure, the reservation rule or the removing rule includes performing reservation or removing according to a principle that subcarriers are reserved at equal intervals from a starting subcarrier when the downlink transmission and the uplink grant information used for performing the uplink data retransmission use a same subcarrier spacing or same OFDM symbol duration. The subcarrier spacing is, or the starting subcarrier is, or the subcarrier spacing and the starting subcarrier are configured by the base station or agreed on by the base station and the UE.

In the embodiment of the present disclosure, the reservation rule or the removing rule includes performing reservation or removing according to a principle that consecutive subcarriers are reserved. A position of the consecutive subcarriers is configured by the base station or agreed on by the base station with the UE or obtained by a calculation of known parameters according to a known algorithm.

In the embodiment of the present disclosure, when the downlink transmission and the uplink grant information used for performing the uplink data retransmission use different subcarrier spacings, the reservation rule or the removing rule includes: performing reservation or removing according to a principle that a number of reserved OFDM symbols is at least one OFDM symbol corresponding to the downlink transmission; or performing the reservation or the removing according to a principle that the number of reserved OFDM symbols is at least one OFDM symbol corresponding to the uplink grant information used for performing the uplink data retransmission.

In the embodiment of the present disclosure, the interval information determining unit is further configured to meet one of the conditions described below when a value of N1+M1, or N2+M2, or M1, or M2 is configured.

An OFDM symbol used by the uplink grant information for performing the uplink data retransmission is an OFDM symbol of downlink control after an end of first data transmission of the UE.

The OFDM symbol used by the uplink grant information for performing the uplink data retransmission is an OFDM symbol of the downlink control after an interval of N1 or an interval of N2.

The OFDM symbol used by the uplink grant information for performing the uplink data retransmission is an OFDM symbol of the downlink control.

The OFDM symbol used by the uplink grant information for performing the uplink data retransmission is an OFDM symbol of downlink data. The downlink control is downlink control of a low-latency service.

In the second implementation mode of the present disclosure, the device for indicating a transmission interval includes an interval information determining unit 91 and a sending unit 92. The interval information determining unit 91 is configured to configure or agree with a UE on interval information for sending acknowledgement (ACK)/negative acknowledgement (NACK) information corresponding to downlink data transmission. The ACK/NACK information is used for determining whether downlink data is correctly received by the UE.

The sending unit 92 is configured to send the ACK/NACK information at a position indicated by the interval information to determine whether the downlink data is correctly received by the UE.

The interval information is determined in one of the manners described below.

A third interval is used to indicate an interval between a position of the ACK/NACK information corresponding to the downlink data transmission and an end position of the downlink data transmission.

A fourth interval is used to indicate an interval between a position of the ACK/NACK information corresponding to the downlink data transmission and a position of the downlink data transmission.

In the embodiment of the present disclosure, the third interval is represented by N3+M3, N3 is a positive integer, and M3 is an integer.

The fourth interval is represented by N4+M4, N4 is a positive integer, and M4 is an integer.

In a process of determining the interval information, when M3 and M4 are positive integers, calculation is performed in a positive time direction, and when M3 and M4 are negative integers, the calculation is performed in a reverse time direction.

In the embodiment of the present disclosure, N3, or N4, or N3+M3, or N4+M4 is used for representing a position of a starting orthogonal frequency division multiplexing (OFDM) symbol position of the ACK/NACK information corresponding to the downlink data transmission. The total number of symbols following the position of the starting OFDM symbol is determined in the following manner: being agreed by the base station and the UE, or being notified, by the base station, to the UE through signaling.

In the embodiment of the present disclosure, in the third interval, N3 is the total number of scheduling units; and M3 is the number of or serial numbers of OFDM symbols in the scheduling unit indicated by N3. Alternatively, M3 is the number of or serial numbers of slots in the scheduling unit indicated by N3.

Alternatively, in the third interval, when a scheduling unit immediately after the downlink data transmission of the UE is scheduling unit n (n is a positive integer), the ACK/NACK information corresponding to the downlink data transmission is in scheduling unit n+N3. M3 describes a starting OFDM symbol or a starting slot of the ACK/NACK information in the scheduling unit n+N3. The total number of symbols following a position of the starting OFDM symbol is determined in the following manner: being agreed by the base station and the UE, or being notified, by the base station, to the UE through signaling.

In the fourth interval, N4 is the total number of scheduling units; and M4 is the number of or serial numbers of OFDM symbols in the scheduling unit indicated by N4. Alternatively, M4 is the number of or serial numbers of slots in the scheduling unit indicated by N4.

Alternatively, in the fourth interval, when the downlink data transmission of the UE is in scheduling unit n (n is a positive integer), the ACK/NACK information corresponding to the downlink data transmission is in scheduling unit n+N4. M4 describes a starting OFDM symbol or a starting slot of the ACK/NACK information in the scheduling unit n+N4. The total number of symbols following a position of the starting OFDM symbol is determined in the manner: being agreed by the base station and the UE, or being notified, by the base station, to the UE through signaling.

In the embodiment of the present disclosure, in the third interval, N3 and M3 are both the total number of scheduling units. In the third interval, when a scheduling unit immediately after the downlink data transmission of the UE is scheduling unit n, the ACK/NACK information corresponding to the downlink data transmission is in scheduling unit n+N3+M3.

In the fourth interval, N4 and M4 are both the total number of scheduling units. In the fourth interval, when the downlink data transmission of the UE is in scheduling unit n, the ACK/NACK information corresponding to the downlink data transmission is in scheduling unit n+N4+M4.

In the third implementation mode of the present disclosure, the device for indicating a transmission interval includes an interval information determining unit 91 and a sending unit 92. The interval information determining unit 91 is configured to configure or agree with a UE on interval information for sending downlink data retransmission. The downlink data retransmission is used for retransmitting downlink data when acknowledge information corresponds to the downlink data is NACK.

The sending unit 92 is configured to send the downlink data retransmission at a position indicated by the interval information so that the UE re-receives the downlink data.

The interval information is determined in one of the manners described below.

A fifth interval is used to indicate an interval between a position where downlink data retransmission is sent and a position of the ACK/NACK information corresponding to the downlink data.

A sixth interval is used to indicate an interval between a position where the downlink data retransmission is sent and a position of last downlink data transmission.

In the embodiment of the present disclosure, the fifth interval is represented by N5+M5, N5 is a positive integer, and M5 is an integer.

The sixth interval is represented by N6+M6, N6 is a positive integer, and M6 is an integer.

In a process of determining the interval information, when M5 and M6 are positive integers, calculation is performed in a positive time direction, and when M5 and M6 are negative integers, the calculation is performed in a reverse time direction.

In the embodiment of the present disclosure, N5, or N6, or N5+M5, or N6+M6 is used for representing a position of a starting orthogonal frequency division multiplexing (OFDM) symbol position of the downlink data retransmission. The total number of symbols following the position of the starting OFDM symbol is determined in the following manner: being agreed by the base station and the UE, or being notified, by the base station, to the UE through signaling.

In the embodiment of the present disclosure, in the fifth interval, N5 is the total number of scheduling units; and M5 is the number of or serial numbers of OFDM symbols in the scheduling unit indicated by N5. Alternatively, M5 is the number of or serial numbers of slots in the scheduling unit indicated by N5.

Alternatively, in the fifth interval, when the acknowledge information corresponding to the downlink data is in scheduling unit n, n being a positive integer, the downlink data retransmission is in scheduling unit n+N5. M5 describes a starting OFDM symbol or a starting slot of the downlink data retransmission in the scheduling unit n+N5. The total number of symbols following a position of the starting OFDM symbol is determined in the following manner: being agreed by the base station and the UE, or being notified, by the base station, to the UE through signaling.

In the sixth interval, N6 is the total number of scheduling units; and M6 is the number of or serial numbers of OFDM symbols in the scheduling unit indicated by N6. Alternatively, M6 is the number of or serial numbers of slots in the scheduling unit indicated by N6.

Alternatively, in the sixth interval, when the last downlink data transmission is in scheduling unit n, n being a positive integer, the downlink data retransmission is in scheduling unit n+N6. M6 describes a starting OFDM symbol or a starting slot of the downlink data retransmission in the scheduling unit n+N6. The total number of symbols following a position of the starting OFDM symbol is determined in the manner: being agreed by the base station and the UE, or being notified, by the base station, to the UE through signaling.

In the embodiment of the present disclosure, in the fifth interval, N5 and M5 are both the total number of scheduling units. In the fifth interval, when the acknowledge information corresponding to the downlink data is in scheduling unit n, the downlink data retransmission is in scheduling unit n+N5+M5.

In the sixth interval, N6 and M6 are both the total number of scheduling units. In the sixth interval, when the last downlink data transmission is in scheduling unit n, the downlink data retransmission is in scheduling unit n+N6+M6.

In the fourth implementation mode of the present disclosure, the device for indicating a transmission interval includes an interval information determining unit 91 and a sending unit 92. The interval information determining unit 91 is configured to configure or agree with a UE on interval information for sending uplink grant information and corresponding uplink data.

The sending unit 92 is configured to send the uplink data at a position indicated by the interval information so that the base station receives the uplink data.

The interval information is determined in one of the manners described below.

A seventh interval is used to indicate an interval between a position where the uplink data is sent and a position of the corresponding uplink grant information.

In the embodiment of the present disclosure, the seventh interval is represented by N7+M7, N7 is a positive integer, and M7 is an integer.

In a process of determining the interval information, when M7 is a positive integer, calculation is performed in a positive time direction, and when M7 is a negative integer, the calculation is performed in a reverse time direction.

In the embodiment of the present disclosure, N7 or N7+M7 is used for representing a position of a starting orthogonal frequency division multiplexing (OFDM) symbol of the uplink data corresponding to the uplink grant information. The total number of symbols following the position of the starting OFDM symbol is determined in the following manner: being agreed by the base station and the UE or being notified, by the base station, to the UE through signaling. In the embodiment of the present disclosure, in the seventh interval, N7 is the total number of scheduling units; and M7 is the number of or serial numbers of OFDM symbols in the scheduling unit indicated by N7. Alternatively, M7 is the number of or serial numbers of slots in the scheduling unit indicated by N7.

Alternatively, in the seventh interval, when the uplink grant information is sent in scheduling unit n, n being a positive integer, the corresponding uplink data is in scheduling unit n+N7. M7 describes a starting OFDM symbol or a starting slot of the uplink data in the scheduling unit n+N7. The total number of symbols following a position of the starting OFDM symbol is determined in the following manner: being agreed by the base station and the UE, or being notified, by the base station, to the UE through signaling.

In the embodiment of the present disclosure, in the seventh interval, N7 and M7 are both the total number of scheduling units. In the seventh interval, when the uplink grant information is sent in scheduling unit n, the uplink data corresponding to the uplink grant information is sent in scheduling unit n+N7+M7.

An embodiment of the present disclosure further provides a computer-readable storage medium configured to store computer-executable instructions which, when executed by a processor, implement the method for indicating a transmission interval described above.

It should be understood by those skilled in the art that the embodiments of the present disclosure can provide a method, a system or a computer program product. Therefore, the embodiments of the present disclosure may take the form of a hardware embodiment, a software embodiment, or an embodiment with a combination of software and hardware. Furthermore, embodiments of the present disclosure can take the form of a computer program product implemented in one or more computer-usable storage media (including, but not limited to, a disk memory and an optical memory) that include computer-usable program codes.

The present application is described with reference to flowcharts and/or block diagrams of methods, devices (systems) and computer program products according to the embodiments of the present disclosure. It should be understood that each flow and/or block in the flowcharts and/or block diagrams and a combination of flows and/or blocks in the flowcharts and/or block diagrams are implemented by computer program instructions. These computer program instructions can be provided to a general-purpose computer, a special-purpose computer, an embedded processor or a processor of another programmable data processing device to produce a machine so that instructions executed by a computer or a processor of another programmable data processing device produce an device for implementing the functions specified in one or more flows in the flowcharts and/or one or more blocks in the block diagrams.

These computer program instructions can also be stored in a computer-readable memory which can direct a computer or other programmable data processing devices to operate in a particular manner so that the instructions stored in the computer-readable memory produce a manufactured product including an instruction device. The instruction device implements the functions specified in one or more flows in the flowcharts and/or one or more blocks in the block diagrams.

These computer program instructions can also be loaded onto a computer or other programmable data processing devices so that a series of operation steps are performed on the computer or other programmable devices to produce processing implemented by a computer. Therefore, instructions executed on a computer or other programmable devices provide steps for implementing the functions specified in one or more flows in the flowcharts and/or one or more blocks in the block diagrams.

The above are only embodiments of the present disclosure and are not intended to limit the scope of the present application.

## Claims

1. A method for indicating a transmission interval, comprising:
configuring, by a base station, interval information between sending uplink grant information and sending its corresponding uplink data; and
receiving, the uplink data, wherein the uplink data is sent by a user equipment, UE, at a position indicated by the interval information;
wherein the interval information is determined in the following manner:
indicating an interval between a position where the uplink data is sent and a position of the corresponding uplink grant information;
wherein the interval is represented by N7 and M7, N7 being configured through higher-layer signaling or physical layer signaling;
in the interval, when the uplink grant information is sent in scheduling unit n, the corresponding uplink data is in scheduling unit n+N7, and M7 describes a starting OFDM symbol of the uplink data in scheduling unit n+N7.

2. The method for indicating a transmission interval of claim 1,
wherein a total number of symbols for the uplink data is determined in the following manner: being notified, by the base station, to the UE through signaling.

3. A method for indicating a transmission interval, comprising:
receiving, by a user equipment, UE, interval information for uplink data corresponding to uplink grant information; and
sending, the uplink data at a position indicated by the interval information;
wherein the interval information is determined in the following manner:
indicating an interval between a position where the uplink data is sent and a position of the corresponding uplink grant information;
wherein the interval is represented by N7 and M7, N7 being configured through higher-layer signaling or physical layer signaling;
in the interval, when the uplink grant information is sent in scheduling unit n, the corresponding uplink data is in scheduling unit n+N7, and M7 describes a starting OFDM symbol of the uplink data in scheduling unit n+N7.

4. A device for indicating a transmission interval, comprising:
an interval information determining unit configured to set interval information between sending uplink grant information and sending its corresponding uplink data; and
a receiving unit configured to receive the uplink data, wherein the uplink data is sent by a user equipment, UE, at a position indicated by the interval information;
wherein the interval information is determined in the following manner:
indicating an interval between a position where the uplink data is sent and a position of the corresponding uplink grant information;
wherein the interval is represented by N7 and M7, N7 being configured through higher-layer signaling or physical layer signaling;
in the interval, when the uplink grant information is sent in scheduling unit n, the corresponding uplink data is in scheduling unit n+N7, and M7 describes a starting OFDM symbol of the uplink data in scheduling unit n+N7.

5. The device for indicating a transmission interval of claim 4,
wherein a total number of symbols for the uplink data is determined in the following manner: being notified, by the base station, to the UE through signaling.

6. A device for indicating a transmission interval, comprising:
a receiving unit configured to receive interval information for uplink data corresponding to uplink grant information; and
a sending unit configured to send the uplink data at a position indicated by the interval information;
wherein the interval information is determined in the following manners:
indicating an interval between a position where the uplink data is sent and a position of the corresponding uplink grant information;
wherein the interval is represented by N7 and M7, N7 being configured through higher-layer signaling or physical layer signaling;
in the interval, when the uplink grant information is sent in scheduling unit n, the corresponding uplink data is in scheduling unit n+N7, and M7 describes a starting OFDM symbol of the uplink data in scheduling unit n+N7.
